# EUROPÄISCHE PATENTANMELDUNG

(11) **EP 2 636 707 A1**
(43) Veröffentlichungstag der Anmeldung: **11.09.2013**
(21) Anmeldenummer: 13155890.0
(22) Anmeldetag: 20.02.2013
(51) Int. Cl.: C09D 5/02, C09D 7/00, C09D 7/14, C09D 5/34

(54) **Verfahren zur Herstellung einer Dispersion**

(30) Priorität: 07.03.2012 DE 102012203555
(71) Anmelder: HILTI Aktiengesellschaft, 9494 Schaan (LI)
(72) Erfinder: Simon, Sebastian, 86807 Buchloe Lindenberg (DE); Förg, Christian, 86862 Dillishausen (DE)

(57) **Zusammenfassung**

Es wird ein Verfahren zur Herstellung einer Dispersion, insbesondere einer Dichtungs- oder Beschichtungsmasse, mit einer Viskosität unter 30.000 mPas, deren Viskosität sich durch die Applikation auf über 50.000 mPas erhöht oder die standfest wird, wobei einer Vorläuferzusammensetzung der Dispersion ein scherverdickendes Additiv bei einer Scherung zugemischt wird, bei der das scherverdickende Additiv nicht aktiviert wird, beschrieben. Damit wird es möglich, Dispersionen, insbesondere Dichtungs- und/oder Beschichtungsmassen, so zu Formulieren, dass diese für die Lagerung und die Verarbeitung eine niedrige Viskosität aufweisen und erst bei der Anwendung der Dispersion durch geeignete Geräte die gewünschte Endviskosität erhält.

## Beschreibung

Die vorliegende Erfindung betrifft ein Verfahren zur Herstellung einer Dispersion, insbesondere einer niedrigviskosen Dispersion für Beschichtungen oder Dichtungen auf Wasserbasis, die sich erst bei deren Applikation in eine Dispersion mit hoher Viskosität oder in eine standfeste Dispersion umwandelt.

Beschichtungs- und Dichtmassen sind heutzutage weitverbreitet und werden in den unterschiedlichsten Bereichen, wie etwa dem baulichen Brandschutz, dem Abdichten von Fugen, als Kleber und dergleichen, umfangreich eingesetzt. Ein Merkmal dieser Massen ist deren hohe Viskosität, da sie nach dem Applizieren nicht mehr verlaufen sollen. Sie sollen unmittelbar nach dem Applizieren standfest sein, um eine möglichst einfache Verarbeitung zu erlauben. Üblicherweise sind Beschichtungsmassen oder Dichtmassen bereits vor ihrer Verarbeitung auf die Verarbeitungs- und Anwendungsviskosität eingestellt.

Die DE 34 33 720 C2 beschreibt eine flammwidrige Dispersionsfarbe auf der Bindemittelbasis einer Dispersion von organischen Polymeren, wie beispielsweise Acrylate, mit einem relativ hohen Feststoffanteil. Die DE 19964153 A1 beschreibt schnell trocknende Putz- und Beschichtungsmassen sowie ein Konzentrat zur Herstellung derartiger Massen.

Aus der DE 19850214 A1 ist eine Polyacrylat-Fugendichtmasse auf der Basis eines Polyacrylates als Bindemittel bekannt, deren Viskosität mittels Wasser eingestellt wird, so dass eine hohe Standfestigkeit aber dennoch sehr gute Verarbeitbarkeit erreicht wird.

Aus der DE 16913204 A1 ist eine feuchtigkeitshärtende Masse zum Dichten und Kleben bekannt, die mittels eines Triglycerids ohne OH-Gruppen und daher vor der Anwendung standfest gemacht wird.

Eine wässrige Dispersionen von Polymeren, die sich nach Entfernen von Wasser in Elastomere oder Harze überführen lassen, wobei die Dispersion je nach Anwendung so eingestellt wird, dass sie standfest oder fließfähig wird, ist in der DE 10349082 A1 beschrieben.

Aus der EP 1557455 A1 ist eine Thixotropiermittel-Zusammensetzung zur Einstellung der Viskosität von reaktiven Zusammensetzungen, wie Kleb- und Dichtstoffe, mit der hochviskose, standfeste Massen hergestellt werden können, bekannt.

Hochviskose, insbesondere standfeste Massen, deren Viskosität bereits auf die Verarbeitungs- und Anwendungsviskosität eingestellt ist, sind nachteilig, da sie zur Verarbeitung hohe Ausbringkräfte oder entsprechende, meist teure Geräte erforderlich machen.

Ein weiterer Nachteil dieser Systeme ergibt sich bei der Verarbeitung der Massen bei niedrigen Temperaturen, insbesondere unter 10°C, da die bereits hoch eingestellte Viskosität, wie sie zur Verarbeitung bei normalen Temperaturen (ca. 20°C - 25°C) erforderlich ist, in den meisten Fällen weiter zunimmt. Daher kommen Geräte, wie beispielsweise kleine Airless-Sprühgeräte, durch die Viskositätszunahme der zu verarbeitenden Massen und das erschwerte Ansaugen an ihre Grenzen. Werden die Massen zur Verarbeitung bei niedrigen Temperaturen eingestellt, müssen diese in den meisten Fällen eine niedrige Viskosität aufweisen. Nachteilig hieran ist allerdings, dass diese Systeme bei der Anwendung im normalen Temperaturbereich eine nicht ausreichende Standfestigkeit aufweisen.

Mehrkomponentensysteme, welche eine Verdickung kurz vor der Verarbeitung ermöglichen, haben den Nachteil eines zusätzlichen Arbeitsaufwands. Ferner sind diese Systeme fehleranfällig etwa durch falsche Dosierung der Komponenten (falsch eingestelltes Mischungsverhältnis), zu kurzes oder zu langes Rühren, sowie durch den Eintrag von Verunreinigungen durch unsaubere Mischgeräte.

Es besteht daher Bedarf an einem Verfahren, mit dem es möglich ist, bekannte Zusammensetzungen, insbesondere Beschichtungs- oder Dichtungszusammensetzungen, herzustellen, die vor der Applikation eine zur einfacheren Handhabung, insbesondere zur einfacheren Verarbeitung (Applikation) hinreichend niedrige Viskosität aufweisen, die aber durch die Verarbeitung, wie Fördern, Pumpen oder Sprühen, in eine hochviskose bis standfeste Masse umgewandelt werden.

Diese Aufgabe wird durch das Verfahren gemäß Anspruch 1 gelöst. Vorteilhafte Ausführungsformen des erfindungsgemäßen Verfahrens sind den entsprechenden Unteransprüchen zu entnehmen.

Unter *"hochviskoser Masse"* wird eine Masse mit einer Viskosität zwischen 38.000 und 65.000 mPas, gemessen nach DIN EN ISO 2555 (+23°C) mit einem Brookfield-Rotationsviskosimeter, verstanden. Der Begriff *"Masse"* soll als Obergriff für *"Beschichtungsmasse"* und *"Dichtmasse"* verstanden werden und umfasst neben den eben genannten Massen auch noch andere Massen, deren Anwendung eine hohe Viskosität bzw. Standfestigkeit erfordert, wie etwa Klebemassen. Als *"standfest"* wird eine Masse mit einer Viskosität über 40.000 mPas, ebenfalls gemessen nach DIN EN ISO 2555 (+23°C) mit einem Brookfield-Rotationsviskosimeter, bezeichnet.

Der Erfindung lag der Gedanke zugrunde, eine anwendungsfertige Masse zu formulieren, die auf eine Lager- und Verarbeitungsviskosität eingestellt wird, d.h. die eine niedrige Viskosität aufweist, so dass sie einfach durch übliche Gerätschaften verarbeitet werden kann. Erst beim Applizieren der Masse, also nach dem Aufsprühen oder dem Pumpen, soll sich die erforderliche bzw. gewünschte hohe Viskosität einstellen.

Die Erfinder haben herausgefunden, dass es durch den Einsatz bestimmter Rheologieadditive möglich wird, durch unterschiedliche Scherraten beim Mischen der Dispersion während der Herstellung und beim Verarbeiten der Masse, deren Viskosität auf die gewünschten Werte einzustellen. Entgegen der üblichen Anwendungen wird das Rheologieadditiv allerdings nicht im Misch- oder Dispergierprozess aktiviert sondern verbleibt zunächst passiv (nicht aktiviert) in der Mischung. Erst durch den Verarbeitungsprozess, das Versprühen oder dem Fördern der Dispersion, wird durch die an der Düse bzw. den Filtern auftretende Scherung das Rheologieadditiv aktiviert und somit die Dispersion auf die Endviskosität, die die Dispersion in der Anwendung erfordert, gebracht.

Gegenstand der Erfindung ist somit ein Verfahren zur Herstellung einer Dispersion, insbesondere einer Dichtungs- oder Beschichtungsmasse, mit einer Viskosität unter 30.000 mPas (Brookfield Spindel 6 bei 10 U/min; +23°C), deren Viskosität sich durch die Applikation auf über 38.000 mPas (Brookfield Spindel 6 bei 10 U/min; +23°C) erhöht und dadurch standfest wird, wobei einer Vorläuferzusammensetzung der Dispersion, insbesondere der Dichtungs- oder Beschichtungsmasse, ein scherverdickendes Additiv bei einer Scherung zugemischt wird, bei der das scherverdickende Additiv nicht aktiviert wird.

Als *"Vorläuferzusammensetzung"* wird eine Zusammensetzung verstanden, welche sämtliche Komponenten der Dispersion bis auf das scherverdickende Additiv und ggf. (weitere) Verdicker enthält, beispielsweise ein Bindemittelsystem, wie eine Acrylatdispersion, Lösungsmittel, wie Wasser, Additive, wie Pigmente, Pigmentverteiler, Mittel zur Einstellung des pH-Wertes der Dispersion, Frostschutzmittel und dergleichen, und Füllstoffe, wie Brandschutzadditive und dergleichen.

Bevorzugt wird das scherverdickende Additiv in einer Menge von 1,0 bis 3,5 Gew.-%, bezogen auf die Dispersion, zu der Vorläuferzusammensetzung gegeben. Höhere Anteile an Verdicker sind wirtschaftlich nicht sinnvoll.

Die Grenzen, in denen die Scherrate für die Zugabe des scherverdickenden Additivs liegen darf, ohne das dieses aktiviert wird und seine viskositätserhöhende Wirkung entfaltet, hängt vom verwendeten Additiv und den Rührbedingungen ab.

Zweckmäßig liegt die Scherrate für das Zumischen des scherverdickenden Additivs im Bereich von 100 bis 1.000 s⁻¹, bevorzugt 500 bis 1.000 s⁻¹ beispielsweise mit einem Turbinenrührer oder einem Butterflymischwerkzeug. Bei hohen Scherraten besteht die Gefahr, dass das Material durch Lagerung oder Transport bereits aktiviert wird. Dies kann beispielsweise durch einen Zumischer bei der Abfüllung der Dispersion erfolgen. Alternativ ist eine Dosierung des scherverdickenden Additivs in einem Statikmischer beim Abfüllprozess möglich.

Bevorzugt wird das scherverdickende Additiv direkt nach der Herstellung der Vorläufermischung und ggf. nach Zugabe eines nicht scherverdickenden Verdickers zugegeben, wobei die Rührzeit auf die homogene Verteilung des Verdickers begrenzt ist. Im Allgemeinen ist ein Homogenisierungsgrad von 90% bereits ausreichend. Alternativ kann das scherverdickende Additiv beim Ab- bzw. Umfüllen der Dispersion in die Vorratsbehältnisse zugemischt werden, beispielsweise durch einen Zumischer oder einen Statikmischer.

Ein ständiges Rühren der Dispersion während und nach der Zugabe des scherverdickenden Additivs sollte vermieden werden, da bereits an den Kanten der Mischwerkzeuge auch bei geringer Drehzahl Scherkräfte auftreten, die das scherverdickende Additiv zum Teil aktivieren. Je länger daher die Rührzeit nach der Zugabe des scherverdickenden Additivs ist, desto höher ist die voreingestellt Viskosität und übersteigt im ungünstigsten Fall die gewünschte Verarbeitungs- bzw. Lagerungsviskosität der Dispersion.

Ein geeignetes scherverdickendes Additiv ist ein wässriges System eines Copolymeren auf der Basis von Acrylsäure, Acrylamid oder wenigstens einem Carboxylgruppen haltigen Acrylsäureester, bevorzugt emulgiert in einer Ölfraktion, insbesondere Erdölfraktion. Der Feststoffgehalt des wässrigen Systems bzw. der Emulsion beträgt zwischen 20 und 40 %, bevorzugt 24 bis 28 %, gemäß DIN 33189 (oder ISO 1625). Es können aber auch andere scherverdickenden Systeme, bevorzugt auf wässriger Basis, als Rheologieadditiv verwendet werden. Als scherverdickende Additive können beispielhaft erwähnt werden: Collacral® HP, Collacral® DS, oder Latekoll® LS 6269 (jeweils BASF).

Bevorzugt wird zur besseren Handhabbarkeit der fertigen Dispersion die Vorläuferzusammensetzung vor der Zugabe des scherverdickenden Additivs auf eine Viskosität von 3.000 bis 30.000 mPas eingestellt. Die Methode zur Bestimmung der Viskosität wird später bei den Ausführungsbeispielen näher beschrieben. Hierzu kann ein Verdickungsmittel in einer Menge zugegeben werden, die ausreichend ist, die Viskosität der Dispersion auf den eben genannten Wert einzustellen. Geeignete Verdickungsmittel sind beispielsweise wasserlösliche viskositätsverleihende Harze, welche bei minimalen Mengen der Dispersion die erwünschte Viskosität zu verleihen vermögen. Aber auch andere Verdickungsmittel, welche dem Fachmann bekannt sind, können verwendet werden.

Die Dispersion kann auch noch weitere Additive enthalten, wie Antiabsetzmittel, Emulgatoren, Weichmacher, Puffer, Hilfsstoffe (z.B. Pigmentverteiler), Frostschutzmittel, Pigmente, organische und/oder anorganische Füllstoffe (z.B. Kreide).

Gegebenenfalls muss die Dispersion vor dem Abfüllen oder der Applikation homogenisiert werden. Dabei ist darauf zu achten, dass durch die Homogenisierung die Viskosität nicht signifikant erhöht wird. Dementsprechend wird die Homogenisierung bei einer Scherrate durchgeführt, bei der eine Aktivierung des scherverdickenden Additivs nicht erfolgt. Wird zu hoch geschert, wird das scherverdickende Additiv aktiviert und die Viskosität steigt auf die angestrebte Endviskosität, wodurch sie nicht mehr durch die herkömmlichen Geräte verarbeitet werden kann.

Entsprechend der Scherrate für das Untermischen des scherverdickenden Additivs wird die Homogenisierung bevorzugt bei einer Scherrate von 100 bis 1.000 s⁻¹ durchgeführt.

Nach der Formulierung der Dispersion, insbesondere der Dichtungs- bzw. Beschichtungsmasse, wird diese in einen Vorratsbehälter gefüllt, wobei die Scherrate so niedrig gehalten wird, dass das scherverdickende Additiv nicht aktiviert wird.

Erst durch das Applizieren der Dispersion erfolgt die Aktivierung des scherverdickenden Additivs, so dass nach dem Applizieren die gewünschte Endviskosität, insbesondere Standfestigkeit erreicht wird. Dies wird durch hinreichende Scherung des Systems während des Applizierens erreicht. Die Scherung kann beispielsweise durch Pumpen mit denen die Dispersion aus einem Vorratsbehälter zu der auszubringenden Stelle transportiert wird, erfolgen. Geeignete Pumpen sind beispielsweise Excenterschneckenpumpen, Membranpumpen oder Kolbenpumpen. Auch Sprühgeräte, wie eine Dosierpumpe mit Scherelementen, oder ein Verlängerungsrohr mit einem innenliegenden Scherelement bzw. Mischer, können eine hinreichende Scherung verursachen. Sollte die Scherung durch die Düse oder die Filter nicht zur Aktivierung ausreichen, können zusätzliche Mischelemente, wie ein Statikmischer, eingesetzt werden.

Bei der Applikation beträgt die Scherrate geeigneterweise ≥ 10.000 s⁻¹, damit das scherverdickende Additiv aktiviert wird, wobei die Viskosität der Dispersion, insbesondere der Dichtungs- oder Beschichtungsmasse auf den gewünschten Wert ansteigt.

Mit dem erfindungsgemäßen Verfahren wird es möglich, Dispersionen, insbesondere Dichtungs- und/oder Beschichtungsmassen so zu Formulieren, dass diese für die Lagerung und die Verarbeitung eine niedrige Viskosität aufweisen. Erst bei der Anwendung der Dispersion wird durch geeignete Geräte die Endviskosität eingestellt.

Hierdurch können die üblicherweise für hochviskose, insbesondere standfeste Massen erforderlichen Durchmesser von Ansaugstutzen reduziert werden. Die bei niedrigen Temperaturen oft nicht mehr verwendbaren Sprühsysteme können durch die geringe benötigte Ansaug- und Förderleistung auch bei tiefen Temperaturen verwendet werden. Ferner kann die Restentleerung von Gebinden in denen das Zusammenlaufen der zu verarbeitenden Masse auf dem tiefsten Punkt, bzw. an der Position des Ansaugrohres von Belang ist, deutlich gesteigert werden. Dementsprechend können einfachere und somit preiswertere Verarbeitungsgeräte und -pumpen eingesetzt werden.

Die Erfindung wird anhand der folgenden Ausführungsbeispiele näher erläutert:

### AUSFÜHRUNGSBEISPIELE

Die Bestimmung der dynamischen Viskosität erfolgte gemäß DIN EN ISO 2555 mit einem Brookfield-Rotationsviskosimeter Typ RV-DVE mit einer Spindel 6 bei 10 Umdrehungen und 23°C über 60 Sekunden bei einer Temperatur von +23°C.

### Beispiel 1

Eine wasserbasierte elastische Beschichtung mit der Formulierung aus Tabelle 1 wird mittels eines Verdickersystems (Thixol® 53L (Coatex Inc.)) auf eine Lager- und Verarbeitungsviskosität von 15.000 mPas eingestellt. Anschließend wird unter Rühren bei etwa 100 U/s 2 % m/m Collacral® HP (BASF) eingearbeitet, wodurch eine Masse mit einer Viskosität von etwa 30.000 mPas erhalten wird. Es wird dabei so nur lange gerührt, bis eine homogen Dispersion erhalten wird.

**Tabelle 1: Zusammensetzung - Dispersion Beispiel 1**

| Komponente | Anteil [Gew.-%] |
|---|---|
| wässrige, 50%-ige Acrylatdispersion (Styrolacrylatdispersion, Acronal® NS 567 (50%), BASF) | 40 |
| Wasser | 15 |
| Kreide (Omyacarb 5-GU, Bassermann minerals GmbH) | 30 |
| Pigmentverteiler (Pigmentverteiler A, BASF) | 3 |
| Diisononylphthalat | 3 |
| Ammoniak oder Ammoniummonophosphat (Einstellung pH) | 2 |
| Monoethylenglykol | 2 |
| Titandioxid (Kronos® 2300, KRONOS worldwide, Inc.) | 5 |

Diese Masse wird mit einem druckaufbauenden System verarbeitet und durch einen Filter und eine Sprühdüse (Membranpumpe Wagner SF31; Spraytip 425) transportiert. Dabei stellt sich eine standfeste Masse mit einer Viskosität von 54.000 mPas ein.

### Beispiel 2

Die Komponenten für eine wasserbasierte elastische Beschichtung mit der Formulierung aus Tabelle 2 werden vermischt, wobei eine Dispersion mit einer Viskosität von 12.000 mPas erhalten wird. Anschließend werden unter Rühren bei etwa 100 U/s 2 % m/m Collacral HP (BASF) eingearbeitet, wodurch eine Masse mit einer Viskosität von etwa 30.000 mPas erhalten wird. Es wird dabei so nur lange gerührt, bis eine homogen Dispersion erhalten wird.

**Tabelle 2: Zusammensetzung - Dispersion Beispiel 2**

| Komponente | Anteil [Gew.-%] |
|---|---|
| wässrige, 50%-ige Acrylatdispersion (Ethylen-Vinylacetat-Emulsion, DUR-O-SET® Elite 22LV, Celanese Emulsions) | 20 |
| Wasser | 10 |
| Kreide (Omyacarb 5-GU, Bassermann minerals GmbH) | 60,5 |
| Pigmentverteiler (Pigmentverteiler A, BASF) | 1 |
| Ammoniak oder Ammoniummonophosphat (Einstellung pH) | 1 |
| Monoethylenglykol | 2,5 |
| Titandioxid (Kronos® 2300, KRONOS worldwide, Inc.) | 5 |

Diese Masse wird mit einem druckaufbauenden System verarbeitet und durch einen Filter und eine Sprühdüse (Kolbenpumpe Graco Ultramay 695; Spraytip 517) transportiert. Dabei stellt sich eine standfeste Masse mit einer Viskosität von 54.000 mPas ein. Diese Masse konnte aus einem Eimer gerade noch angesaugt werden, ohne dass z.B. Druckfolgeplatten notwendig wurden.

Es konnte gezeigt werden, dass es möglich ist, ein scherverdickendes Additiv in eine Dispersion einzuarbeiten ohne dass das Additiv aktiviert wurde, so dass eine Dispersion mit einer Viskosität erhalten wurde bei der die Dispersion einfach verarbeitet werden kann. Nach der Verarbeitung mittels eines Gerätes, durch das die Dispersion geschert wird, konnte jeweils eine standfeste Masse erhalten werden.

## Patentansprüche

1. Verfahren zur Herstellung einer Dispersion mit einer Viskosität unter 30.000 mPas, deren Viskosität sich durch die Applikation auf über 50.000 mPas erhöht oder die standfest wird, wobei einer Vorläuferzusammensetzung der Dispersion ein scherverdickendes Additiv bei einer Scherung zugemischt wird, bei der das scherverdickende Additiv nicht aktiviert wird.

2. Verfahren nach Anspruch 1, wobei das scherverdickende Additiv in einer Menge von 1,5 bis 3,5 Gew.-%, bezogen auf die Dispersion, zu der Vorläuferzusammensetzung gegeben wird.

3. Verfahren nach Anspruch 1 oder 2, wobei das scherverdickende Additiv bei einer Scherrate im Bereich von 100 bis 1.000 s⁻¹ zugegeben wird.

4. Verfahren nach einem der vorhergehenden Ansprüche, wobei das scherverdickende Additiv ein wässriges System eines Copolymeren auf der Basis von Acrylsäure, Acrylamid oder wenigstens einem Carboxylgruppen haltigen Acrylsäureester ist.

5. Verfahren nach Anspruch 4, wobei das wässrige System eines Copolymeren in einer Ölfraktion emulgiert ist.

6. Verfahren nach Anspruch 4 oder 5, wobei das wässrige System bzw. die Emulsion einen Feststoffgehalt von 20 bis 40 % gemäß DIN 33189 aufweist.

7. Verfahren nach einem der vorhergehenden Ansprüche, wobei die Viskosität der Vorläuferzusammensetzung vor der Zugabe des scherverdickenden Additivs auf 3.000 bis 30.000 mPas eingestellt wird.

8. Verfahren nach einem der vorhergehenden Ansprüche, wobei nach Zugabe des scherverdickenden Additivs die Dispersion bei einer Scherrate homogenisiert wird, bei der das scherverdickende Additiv nicht aktiviert wird.

9. Verfahren nach Anspruch 8, wobei die Homogenisierung bei einer Scherrate von 100 bis 1.000 s⁻¹ durchgeführt wird.

10. Verfahren nach einem der vorhergehenden Ansprüche, wobei die Dispersion bei einer Scherrate in einen Vorratsbehälter gefüllt wird, bei der das scherverdickende Additiv nicht aktiviert wird.

11. Dispersion, aufweisend eine Viskosität unter 30.000 mPas, wobei sich die Viskosität durch Applikation auf über 50.000 mPas erhöht oder die Dispersion standfest wird, erhältlich durch ein Verfahren gemäß den Ansprüchen 1 bis 10.
